# EUROPÄISCHE PATENTSCHRIFT

(11) **EP 1 123 845 B1**
(45) Veröffentlichungstag und Bekanntmachung des Hinweises auf die Patenterteilung: **22.11.2006**
(21) Anmeldenummer: 01102713.3
(22) Anmeldetag: 06.02.2001
(51) Int. Cl.: B60R 21/26

(54) **Gasgenerator**
Gas generator
Générateur de gaz

(30) Priorität: 11.02.2000 DE 20002377 U
(43) Veröffentlichungstag der Anmeldung: 16.08.2001
(73) Patentinhaber: TRW Airbag Systems GmbH, 84544 Aschau am Inn (DE)
(72) Erfinder: Lutz, Harald, 84428 Buchbach (DE); Sponfelder, Oskar, 84453 Mühldorf (DE); Schönhuber, Georg, 84565 Oberneukirchen (DE)
(74) Vertreter: Kitzhofer, Thomas

(56) Entgegenhaltungen:
- EP-A- 0 733 519
- EP-A- 0 755 748
- EP-A- 0 841 225
- WO-A-99/42339
- DE-A- 4 324 554
- US-A- 5 149 129

## Beschreibung

Die Erfindung betrifft einen Gasgenerator, nach dem Oberbegriff des Anspruchs 1.

Bei mehrstufigen Gasgeneratoren werden eine oder mehrere Treibladungen gezündet, um unterschiedliche Gasmengen erzeugen zu können. Wenn nicht alle Treibladungen gezündet werden sollen, muß ein sogenanntes Überzünden verhindert werden. Die Zündung einer Treibladung darf nämlich nicht zum Selbstentzünden der anderen Treibladung führen, beispielsweise indem erzeugtes heißes Gas in die Brennkammer der nicht zu aktivierenden Treibladung strömt. Damit dies ausgeschlossen wird, sind die Ausströmöffnungen in den Brennkammern üblicherweise durch Membrane, vorzugsweise Metallfolien, verschlossen. Die Metallfolien sind so ausgebildet, daß sie nur durch die zugeordnete Treibladung zerstört werden, einer Zerstörung aufgrund des Gas- und Partikelstroms beim Zünden einer anderen Treibladung aber widerstehen. Zugleich kann die Membrane auch der hermetischen Abdichtung der Brennkammer dienen, damit keine Feuchtigkeit in die Brennkammer dringen kann. Damit der Generator über Jahre hinweg funktionsfähig bleibt, muß gewährleistet sein, daß die Membrane an der Brennkammerwand befestigt bleibt. Auch beim Zünden einer Treibladung darf sich die Membrane einer nicht zu zündenden Treibladung keinesfalls im Bereich ihres Randes von der Brennkammer lösen, ansonsten würde ein Gasstrom in die Brennkammer gelangen und die Treibladung zünden.

Aus der EP-A-0 841 225 ist ein Gasgenerator bekannt, der zwei koaxiale, rohrförmige Kammern aufweist. In der inneren Kammer befinden sich ein Treibmittel und ein Zünder und in der äußeren Kammer ein Gaserzeugungsmittel. Die beiden Kammern stehen über Öffnungen miteinander in Verbindung, die vor dem Zünden durch ein Dichtungsband verschlossen sind. Ein Zünden des Treibmittels bewirkt durch den Druckanstieg in der inneren Kammer ein Aufbrechen des Dichtungsbands, wodurch auch das Gaserzeugungsmittel gezündet wird.

Die DE-A-43 24 554 stellt einen Gasgenerator vor, der ein Innen- und ein Außenrohr umfaßt, wobei im Innenrohr ein gaserzeugendes Mittel und ein Zünder vorgesehen sind. Das Innenrohr weist Öffnungen auf, die am Innenrohr von einem Verdämmungsband und am Außenrohr von einem Abdichtband verschlossen sind. Das Abdichtband dient lediglich zur Abdichtung gegen Feuchtigkeit. Beim Zünden des gaserzeugenden Mittels werden durch den Druckanstieg das Verdämmungsband und das Abdichtband aufgerissen, so daß die Verbrennungsgase entweichen können.

Die gattungsgemäße WO-A-99/42339 zeigt einen Gasgenerator mit zwei Brennkammern, die nacheinander gezündet werden können. Die zweite Brennkammer ist von einer wärmedämmenden Isolierung umgeben, die auch die Ausströmöffnungen verschließt und sich bei einer Zündung der zweiten Brennkammer über den Ausströmöffnungen öffnet.

Die Erfindung schafft einen Gasgenerator, bei dem ein Überzünden noch sicherer vermieden werden kann. Dies wird durch einen Gasgenerator nach Anspruch 1 erreicht.

Gemäß der Erfindung ist eine Schutzfolie außenseitig an dem Rand der Membrane befestigt, wobei die Schutzfolie stets über den Rand der Membrane hinausgehen muß, damit dieser auch tatsächlich geschützt ist.

Vorzugsweise ist die Membrane auf der der Treibladung abgewandten Seite der Brennkammerwand befestigt. Bei dieser Ausführungsform ist die Membrane nicht in der Brennkammer, sondern außerhalb derselben vorgesehen, damit der Rand der Folie durch die Druck- und Strömungsbelastung beim Zünden einer der Membrane nicht zugeordneten Treibladung gegen die Wand gedrückt wird und nicht von ihr weggezogen wird.

Die Schutzfolie ist auf der Außenseite der Membrane angebracht, um den Rand der Membrane vor der Gasströmung zu schützen.

Die Schutzfolie kann eine duktile Metallfolie sein, die sich den geometrischen Gegebenheiten leicht anpassen läßt.

Falls die Membrane ebenfalls aus Metall ist, kann die Schutzfolie durch Schweißen an der Membrane befestigt sein.

Ferner kann eine Schutzeinrichtung als eine Vertiefung in der Brennkammerwand vorhanden sein, in die der Rand der Membrane eingedrückt ist und der damit vom Gasstrom nicht direkt erfaßt werden kann, da er in der strömungsgeschützten Vertiefung liegt.

Eine Schutzeinrichtung kann darüber hinaus in Form eines Vorsprungs der Brennkammerwand ausgebildet sein, der längs des Randes, angrenzend an den Rand verläuft. Auch bei dieser Ausgestaltung dient der Vorsprung dazu, den Rand nicht unmittelbar der Gasströmung auszusetzen. Der Vorsprung dient als Strömungsabweiser.

Die Membrane kann auch in Umfangsrichtung offen sein und eine Stirnwand aufweisen, wobei die Stirnwand abgeschrägt oder abgerundet sein kann. Diese strömungsgünstige Gestaltung schützt die Stirnwand der Membran vor der Gasströmung.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine Längsschnittansicht durch einen erfindungsgemäßen zweistufigen Gasgenerator,
- Figur 2 eine Querschnittsansicht durch den Brennkammereinsatz des Gasgenerators nach Figur 1 gemäß einer ersten Ausführungsform,
- Figur 3 eine Seitenansicht des Brennkammereinsatzes des Gasgenerators nach Figur 2 in Richtung des Pfeiles A gesehen gemäß einer nicht unter die Erfindung fallenden Variante, die nur zum besseren Verständnis erläutert ist,
- Figur 4 eine Seitenansicht des Brennkammereinsatzes des Gasgenerators gemäß einer ersten Ausführungsform der vorliegenden Erfindung,
- Figur 5 eine Seitenansicht des Brennkammereinsatzes des Gasgenerators gemäß einer zweiten Ausführungsform der vorliegenden Erfindung,
- Figur 6 eine Seitenansicht des Brennkammereinsatzes des Gasgenerators gemäß einer dritten Ausführungsform der vorliegenden Erfindung,
- Figur 7 lediglich zu Erläuterungszwecken eine Querschittsansicht durch einen Brennkammereinsatz des Gasgenerators, wobei die obere Hälfte zusätzliche Befestigungs- und Schutzeinrichtungen zeigen, und
- Figur 8 lediglich zu Erläuterungszwecken eine Seitenansicht des Brennkammereinsatzes des Gasgenerators, die ebenfalls eine zusätzliche Möglichkeit der verbesserten randseitigen Befestigung der Membrane zeigt.

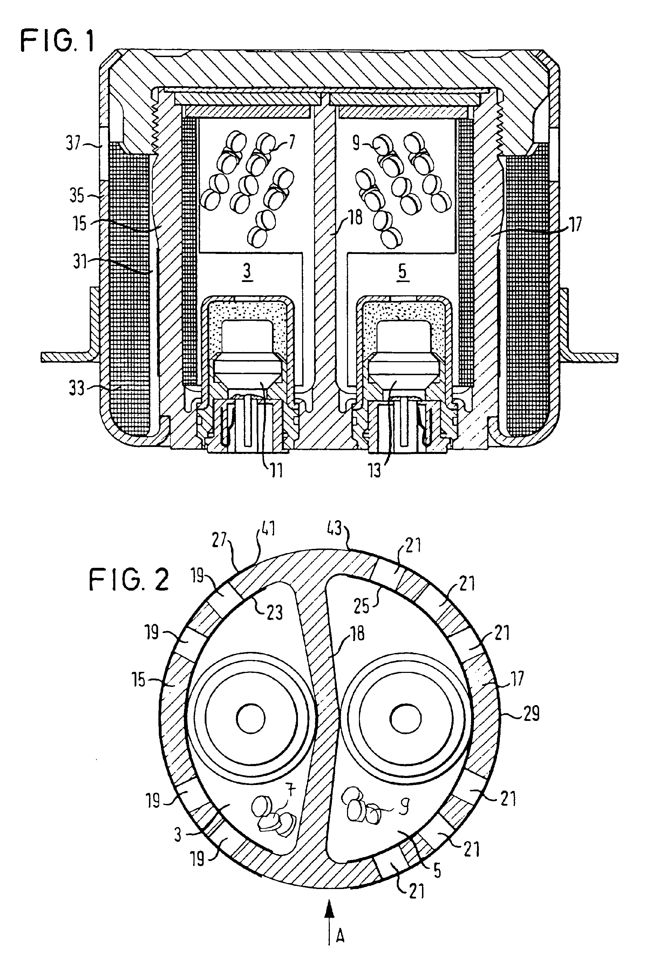

In Figur 1 ist ein Zwei-Stufen-Gasgenerator dargestellt, der eine erste und eine zweite Brennkammer 3 bzw. 5 mit einer entsprechenden ersten und einer entsprechenden zweiten Treibladung 7 bzw. 9 aufweist. Die Treibladungen 7, 9 haben zugehörige Zünder 11 bzw. 13, so daß die Treibladungen 7, 9 einzeln und unabhängig von einander gezündet werden können. Jede Brennkammer 3, 5 wird außenseitig durch eine zugehörige Brennkammerwand 15 bzw. 17 begrenzt.

Wie aus Figur 2 zu entnehmen ist, gehen die beiden Brennkammerwände 15, 17 ineinander über und ergänzen sich zu einem Kreiszylinder. Eine gemeinsame, innere Brennkammerwand 18 bildet einen Verbindungssteg zwischen im wesentlichen gegenüberliegenden Abschnitten des Kreiszylinders und trennt die beiden Brennkammern 3, 5. Die Brennkammerwände 15, 17, 18, die einstückig miteinander verbunden sind, bilden einen Brennkammereinsatz, der in den Figuren 2 bis 7 in verschiedenen Ausführungsformen dargestellt ist. In den außenseitigen Brennkammerwänden 15, 17 sind zahlreiche Ausströmöffnungen 19 bzw. 21 vorgesehen. Auf der der Treibladung zugeordneten Innenseite jeder Brennkammerwand 15, 17 liegt jeweils eine Verdämmfolie 23 bzw. 25 an, die die Auströmöffnungen 19 bzw. 21 verschließt und für eine Verdämmung der entsprechenden Brennkammer 3, 5 sorgt.

Auf der der Treibladung abgewandten Außenseite jeder Brennkammerwand 15, 17 ist zusätzlich jeweils eine Membrane 27 bzw. 29 an der Brennkammerwand 15, 17 befestigt, die zusätzlich die Ausströmöffnungen 19 bzw. 21 schließt. Die beiden Membrane 27, 29 dienen ebenfalls der Verdämmung der Brennkammern 3, 5 und zusätzlich dazu, ein sogenanntes Überzünden zu verhindern, was im folgenden noch näher erläutert wird.

Radial außenseitig schließt sich an die Brennkammerwände 15, 17 eine umfangsmäßig geschlossene kreisringförmige gemeinsame Filterkammer 31 an, in der ein kreisringförmiger Filter 33 angeordnet ist. Ein Außengehäuse 35 mit Ausströmöffnungen 37 schließt den Gasgenerator nach außen ab.

Wenn nur eine Treibladung 7 oder 9 gezündet werden soll, zerstört diese die zugehörige Verdämmfolie 23, 25 und die zugeordnete Membrane 27 oder 29, so daß das Gas über die Ausströmöffnungen 19 oder 21 in die Filterkammer 31 gelangt. Da sich das erzeugte Gas und die erzeugten heißen Partikel dann gleichmäßig in der umfangsmäßig geschlossenen Filterkammer 31 verteilen, könnte der Gasstrom oder die heißen Partikel zum Zerstören der Membrane führen, die der nicht zu aktivierenden Treibladung zugeordnet ist. Jede Membrane 27, 29 muß deshalb so stabil ausgebildet sein, daß sie beim Zünden der ihr nicht zugeordneten Treibladung nicht zerstört wird. Die Membrane 27, 29 sind deshalb üblicherweise aus einer Metallfolie, zum Beispiel einer Stahlfolie, die großflächig an der zugeordneten Brennkammerwand angeklebt ist, wobei der Klebstoff zwischen der Membrane und der Brennkammerwand vorgesehen ist.

Durch die Gasströmung sind die Ränder der Membrane 27, 29 starken Beanspruchungen ausgesetzt, die dazu führen könnten, daß sich die Membrane in Umfangsrichtung, das heißt insbesondere an ihren axial verlaufenden Rändern 41 bzw. 43 von der zugehörigen Brennkammerwand lösen.

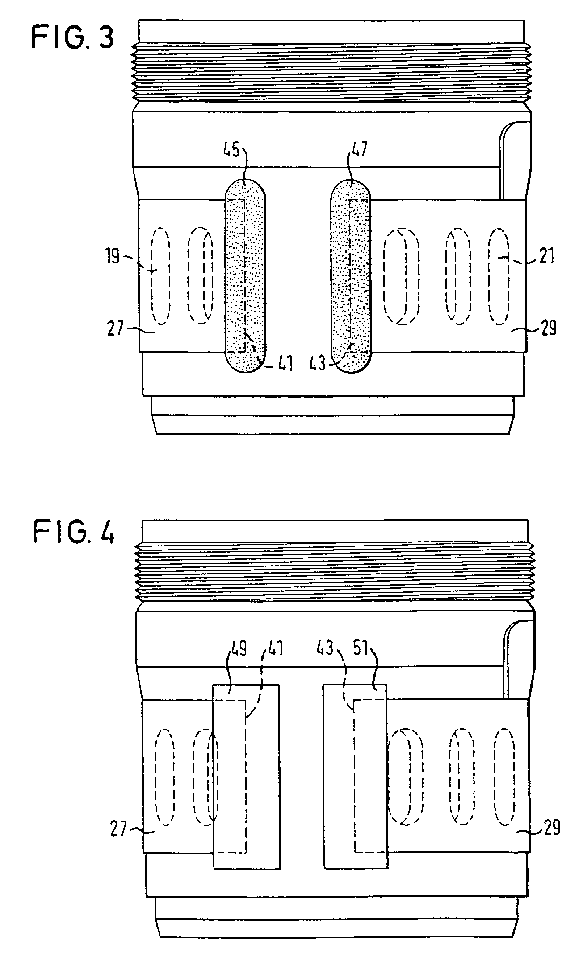

In Figur 3 ist gezeigt, daß im Bereich der Ränder 41, 43 außenseitig auf die Membrane 27, 29 ein Klebstoff in Form eines Metallklebstoffs aufgebracht ist. Es ergeben sich damit zwei streifenförmige Kleberabschnitte 45, 47, die den Übergang der axialen Ränder 41, 43 zu den Brennkammerwänden 15, 17 vollständig abdecken. Der Klebstoff schützt damit die axialen Ränder 41, 43 vor direkter Anströmung von heißem Gas. Als bevorzugter Klebstoff hierfür wird ein Metallkleber, der unter dem Handelsnamen Loctite 3450 bekannt ist, verwendet.

Um ein Ablösen der Membrane 27, 29 im Bereich ihrer axialen Ränder 41, 43 zu verhindern, sind zusätzliche Befestigungs- oder Schutzeinrichtungen vorgesehen, die im Folgenden näher erläutert werden.

Figur 4 zeigt, daß Schutzfolien 49, 51, vorzugsweise aus leicht verformbarem Metall vorgesehen sind, die die axialen Ränder 41, 43 überdecken. Die Schutzfolien 49, 51, die vorzugsweise aus einer duktilen Metallfolie sind, die gut der Kontur der aufgeklebten Membranenden angepaßt werden kann, sind entweder selbstklebend oder können beispielsweise mittels eines Klebstoffs auf den Membranen 27, 29 und den Brennkammerwänden 15, 17 befestigt werden. Sie dienen als Befestigungs- und Schutzeinrichtungen.

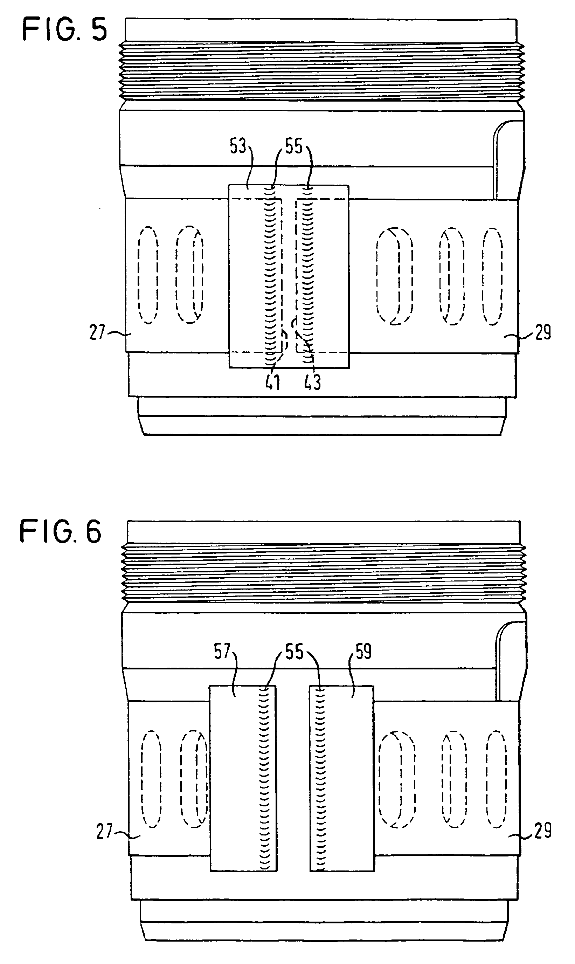

Es kann auch eine gemeinsame Schutzfolie 53 vorgesehen sein (Figur 5), die die benachbarten axialen Ränder 41, 43 abdeckt. Die Schutzfolie 53 ist durch Schweißen an der Brennkammerwand befestigt, wobei die Schweißnähte 55 über die Membrane 27, 29 verlaufen und mit diesen verschweißt werden. Die Schweißnähte erstrecken sich in axialer Richtung aber auch über die Membrane 27, 29 hinaus, so daß die Schutzfolie 53 direkt mit der Brennkammerwand verbunden ist.

Anstatt einer gemeinsamen Schutzfolie 53 können auch zwei Schutzfolien 57, 59, wie dies in Figur 6 dargestellt ist, aus Metall, zum Beispiel Kupfer, durch Schweißen an der Brennkammerwand und/oder der Membrane 27 oder 29 befestigt sein. Die Schutzfolien 57, 59 sind so dünn und duktil, daß sie der Form der Brennkammerwand und der darunter liegenden Membrane 27, 29 leicht durch Andrücken angepaßt werden können.

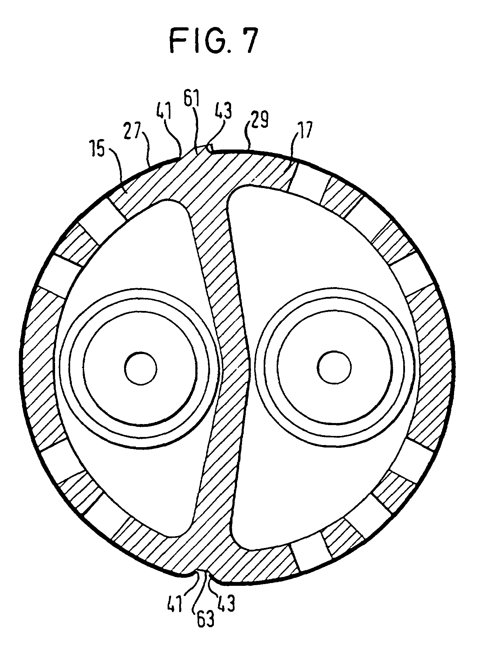

Nach der in Figur 7 dargestellten Querschnittsansicht des Brennkammereinsatzes ist eine sogenannte Schutzeinrichtung vorgesehen, die ein unmittelbares Anströmen der axial verlaufenden Ränder 41, 43 verhindern sollen.

In der oberen Hälfte des in Figur 7 gezeigten Schnittes ist am Übergang der Brennkammerwände 15, 17 ein radial nach außen ragender, über die gesamte axiale Breite der Membrane 27, 29 sich erstreckender Vorsprung 61 vorgesehen, der an der Brennkammerwand angeformt ist. Der Vorsprung 61 dient der Gasumlenkung, so daß, da die Ränder 41, 43 unmittelbar an dem Vorsprung 61 anliegen, diese nicht in Umfangsrichtung direkt angeströmt werden, wenn nur eine Treibladung gezündet wird. Die Ränder 41, 43 liegen sozusagen in Windschattenbereichen des Vorsprungs 61.

Den selben Zweck des Schutzes vor direkter Anströmung erfüllt auch eine Schutzeinrichtung in Form einer Vertiefung 63, die axial verläuft und in die die Ränder 41, 43 gedrückt werden, wie es in der unteren Hälfte in Figur 7 dargestellt ist.

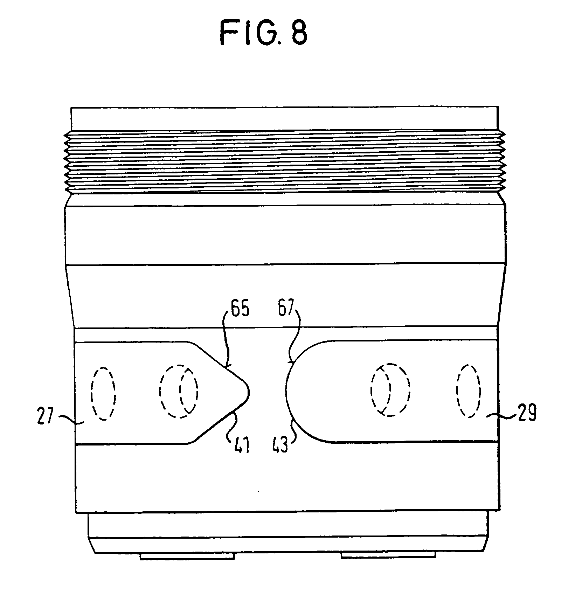

In den in Figur 8 gezeigten Ausführungsformen ist die Stirnwand, also der Rand 41, 43 der Enden der in Umfangsrichtung offenen Membrane 27, 29, strömungsgünstig gestaltet ist.

In der linken Hälfte der Figur 8 weist die Stirnwand 41 zwei aufeinander zulaufende Abschrägungen 65 auf, die in einer stumpfen Spitze enden. In der rechten Hälfte der Figur 8 zeigt die Stirnwand 43 eine annähernd kreisbogenförmige Abrundung 67. In beiden Fällen erstreckt sich die Abschrägung 65 bzw. Abrundung 67 über die gesamte axiale Länge der Stirnwand 41, 43.

Diese Abschrägung 65 bzw. Abrundung 67 dient dazu, die Stirnwand 41, 43 der Membran 27, 29 durch eine Verringerung des der Gasströmung entgegengebrachten Widerstands vor dem Ablösen zu schützen.

## Patentansprüche

1. Gasgenerator, mit
wenigstens zwei mit Treibladungen (7, 9) gefüllten Brennkammern (3,5), die durch Brennkammerwände (15, 17, 18) begrenzt sind, wobei die Treibladungen (7, 9) der beiden Brennkammern (3, 5) unabhängig voneinander gezündet werden können und
wobei die Brennkammerwände (15, 17) Ausströmöffnungen (19, 21) haben, die im nicht aktivierten Zustand durch wenigstens eine aufgebrachte Membrane (27, 29) verschlossen sind,
**dadurch gekennzeichnet, daß**
am umfangsseitigen Rand (41, 43) der Membrane (27, 29) wenigstens abschnittsweise eine als separates Teil ausgebildete zusätzliche Schutzfolie (49, 51; 53; 57, 59) vorgesehen ist, die ein randseitiges Lösen der Membrane (27, 29) von der Brennkammerwand (15, 19) verhindert, wobei die Schutzfolie (49, 51; 53; 57, 59) außenseitig den Rand (41, 43) der Membrane (27, 29) abdeckt und abschnittsweise an der Brennkammerwand befestigt ist.

2. Gasgenerator nach Anspruch 1, **dadurch gekennzeichnet, daß** die Membrane (27, 29) auf der der Treibladung (7, 9) abgewandten Außenseite der Brennkammerwand (15, 17) befestigt ist.

3. Gasgenerator nach Anspruch 1 oder 2, **dadurch gekennzeichnet, daß** die Schutzfolie (49, 51; 53; 57, 59) auf der Außenseite der Membrane (27, 29) aufgebracht ist.

4. Gasgenerator nach einem der vorhergehenden Ansprüche, **dadurch gekennzeichnet, daß** die Schutzfolie (49, 51; 53; 57, 59) eine duktile Metallfolie ist.

5. Gasgenerator nach Anspruch 4, **dadurch gekennzeichnet, daß** die Membrane (27, 29) aus Metall und die Schutzfolie (49, 51; 53; 57, 59) durch Schweißen befestigt ist.

6. Gasgenerator nach einem der vorhergehenden Ansprüche, **dadurch gekennzeichnet, daß** die Membrane (27, 29) am Rand (41, 43) in eine Schutzeinrichtung in Form einer Vertiefung (63) in der Brennkammerwand (15, 17, 18) eingedrückt ist.

7. Gasgenerator nach einem der Ansprüche 1 bis 5, **dadurch gekennzeichnet, daß** eine Schutzeinrichtung in Form eines Vorsprungs (61) an der Brennkammerwand (15, 17, 18) ausgebildet ist, der längs des Randes (41, 43), angrenzend zum Rand (41, 43) verläuft.

8. Gasgenerator nach einem der Ansprüche 1, 2, 6 und 7, **dadurch gekennzeichnet, daß** eine Schutzeinrichtung in Form einer Abschrägung (65) oder einer Abrundung (67) am Rand (41, 43) an den Enden der in Umfangsrichtung offenen Membrane (27, 29) vorgesehen ist.

9. Gasgenerator nach Anspruch 8, **dadurch gekennzeichnet, daß** der Rand (41, 43) der Membrane (27, 29) über die gesamte Breite des Randes (41, 43) in axialer Richtung abgeschrägt oder abgerundet ist.

10. Gasgenerator nach einem der vorhergehenden Ansprüche, **dadurch gekennzeichnet, daß** mehrere Membrane (27, 29) vorgesehen sind und für benachbarte Membrane (27, 29) eine gemeinsame Schutzfolie (57, 59) vorgesehen ist.

## Claims

1. A gas generator, comprising
at least two combustion chambers (3, 5) which are filled with propellant charges (7, 9) and are delimited by combustion chamber walls (15, 17, 18), the propellant charges (7, 9) of the two combustion chambers (3, 5) being adapted to be ignited independently of each other, and
the combustion chamber walls (15, 17) having outflow openings (19, 21) which in the non-activated state are closed by at least one applied membrane (27, 29),
**characterized in that**
an additional protective foil (49, 51; 53; 57, 59) formed as a separate part is provided on at least sections of the peripheral edge (41, 43) of the membrane (27, 29) and prevents the edge of the membrane (27, 29) from becoming detached from the combustion chamber wall (15, 19), the protective foil (49, 51; 53; 57, 59) covering the edge (41, 43) of the membrane (27, 29) on the outside and being fastened to the combustion chamber wall in sections.

2. The gas generator according to Claim 1, **characterized in that** the membrane (27, 29) is fastened on the outer side of the combustion chamber wall (15, 17) facing away from the propellant charge (7, 9).

3. The gas generator according to Claim 1 or 2, **characterized in that** the protective foil (49, 51; 53; 57, 59) is applied on the outer side of the membrane (27, 29).

4. The gas generator according to any of the preceding claims, **characterized in that** the protective foil (49, 51; 53; 57, 59) is a ductile metal foil.

5. The gas generator according to Claim 4, **characterized in that** the membrane (27, 29) is of metal and the protective foil (49, 51; 53; 57, 59) is fastened by welding.

6. The gas generator according to any of the preceding claims, **characterized in that** the edge (41, 43) of the membrane (27, 29) is pressed into a protective device in the form of a depression (63) in the combustion chamber wall (15, 17, 18).

7. The gas generator according to any of Claims 1 to 5, **characterized in that** a protective device in the form of a projection (61) is configured on the combustion chamber wall (15, 17, 18), the projection extending along the edge (41, 43) so as to adjoin the edge (41, 43).

8. The gas generator according to any of Claims 1, 2, 6 and 7, **characterized in that** a protective device in the form of a chamfer (65) or a rounding (67) is provided on the edge (41, 43) at the ends of the membrane (27, 29) open in the peripheral direction.

9. The gas generator according to Claim 8, **characterized in that** the edge (41, 43) of the membrane (27, 29) is chamfered or rounded in the axial direction over the entire width of the edge (41, 43).

10. The gas generator according to any of the preceding claims, **characterized in that** several membranes (27, 29) are provided and a shared protective foil (57, 59) is provided for adjacent membranes (27, 29).

## Revendications

1. Générateur de gaz, comportant
au moins deux chambres de combustion (3, 5) remplies de charges propulsives (7, 9), qui sont délimitées par des parois de chambres de combustion (15, 17, 18), les charges propulsives (7, 9) des deux chambres de combustion (3, 5) pouvant être allumées indépendamment l'une de l'autre, et
les parois de chambres de combustion (15, 17) ayant des orifices d'échappement (19, 21) qui, à l'état non activé, sont fermés par au moins une membrane (27, 29) appliquée,
**caractérisé en ce que**
sur le bord (41, 43) périphérique de la membrane (27, 29) est prévue au moins par tronçons une feuille de protection (49, 51 ; 53 ; 57, 59) additionnelle réalisée sous forme de pièce séparée, qui empêche que sur le bord de la membrane (27, 29), la paroi de chambre de combustion (15 19) se sépare du bord, la feuille de protection (49, 51 ; 53 ; 57, 59) recouvrant sur la face extérieure le bord (41, 43) de la membrane (27, 29) et étant fixée par tronçons sur la paroi de chambre de combustion.

2. Générateur de gaz selon la revendication 1, **caractérisé en ce que** la membrane (27, 29) est fixée sur la face extérieure détournée de la charge propulsive (7, 9), de la paroi de chambre de combustion (15, 17).

3. Générateur de gaz selon la revendication 1 ou 2, **caractérisé en ce que** la feuille de protection (49, 51 ; 53 ; 57, 59) est appliqué sur la face extérieure de la membrane (27, 29).

4. Générateur de gaz selon l'une des revendications précédentes, **caractérisé en ce que** la feuille de protection (49, 51 ; 53 ; 57, 59) est une feuille métallique ductile.

5. Générateur de gaz selon la revendication 4, **caractérisé en ce que** la membrane (27, 29) est en métal et la feuille de protection (49, 51 ; 53 ; 57, 59) est fixée par soudage.

6. Générateur de gaz selon l'une des revendications précédentes, **caractérisé en ce que** la membrane (27, 29) est pressée sur le bord (41, 43) dans un dispositif de protection sous la forme d'un renfoncement (63) dans la paroi de chambre de combustion (15, 17, 18).

7. Générateur de gaz selon l'une des revendications 1 à 5, **caractérisé en ce qu'**un dispositif de protection est réalisé sur la paroi de chambre de combustion (15, 17, 18) sous la forme d'une saillie (61) qui s'étend le long du bord (41, 43) de manière adjacente au bord (41, 43).

8. Générateur de gaz selon l'une des revendications 1, 2, 6 et 7, **caractérisé en ce qu'**un dispositif de protection sous forme d'un chanfrein (65) ou d'un arrondi (67) est prévu sur le bord (41, 43) aux extrémités de la membrane (27, 29) ouverte en direction périphérique.

9. Générateur de gaz selon la revendication 8, **caractérisé en ce que** le bord (41, 43) de la membrane (27, 29) est chanfreiné ou arrondi en direction axiale sur toute la largeur du bord (41, 43).

10. Générateur de gaz selon l'une des revendications précédentes, **caractérisé en ce qu'**il est prévu plusieurs membranes (27, 29) et une feuille de protection (57, 59) commune pour des membranes voisines (27, 29).
